# EUROPEAN PATENT APPLICATION

(11) **EP 4 610 618 A1**
(43) Date of publication of application: **03.09.2025**
(21) Application number: 25157339.0
(22) Date of filing: 12.02.2025
(51) Int. Cl.: G01M 17/10

(54) **SYSTEMS AND METHODS FOR TRAIN WHEEL INSPECTION**

(30) Priority: 01.03.2024 US 202463560370 P
(71) Applicant: Baker Hughes Holdings LLC, Houston, TX 77073 (US)
(72) Inventor: HENRIX, Frank, Houston, 77073 (US); WERNER, Daniel, Houston, 77073 (US); FRANZEN, Andreas, Houston, 77073 (US); KAHMANN, Frank, Houston, 77073 (US)
(74) Representative: Illingworth-Law, William Illingworth

(57) **Abstract**

An inspection system is provided that includes a first inspection unit arranged to couple to a first wheelset of a train during an inspection operation, a second inspection unit arranged to couple to a second wheelset of the train during the inspection operation, wherein the first wheelset and the second wheelset are separated along a horizonal axis by an offset distance, one or more lifting mechanisms arranged to adjust a vertical position of at least one of the first inspection unit or the second inspection unit along a vertical axis, one or more offset correction mechanisms arranged to adjust a horizonal distance between the first inspection unit and the second inspection unit along the horizonal axis, and one or more controllers communicatively coupled to and arranged to control the first inspection unit, the second inspection unit, the one or more lifting mechanisms and the one or more offset correction mechanisms.

## Description

### CROSS-REFERENCE TO RELATED APPLICATIONS

This application claims benefit and priority to U.S. Provisional Application No. 63/560,370, filed March 1, 2024, and entitled "SYSTEMS AND METHODS FOR TRAIN WHEEL INSPECTION," the contents of which are hereby incorporated by reference herein in their entirety.

### FIELD

This disclosure is generally directed toward systems and methods for train wheel inspection. Specifically, this disclosure is directed toward improving productivity of train wheel inspection.

### BACKGROUND

Non-destructive testing (NDT) may refer to a class of analytical techniques that may be used to inspect a target, without causing damage, to ensure that the inspected target meets required specifications. NDT may be employed in a wide variety of industries such as aerospace, power generation, oil and gas transport or refining, and transportation. In some industries, NDT systems and related structures are integrated into surrounding infrastructure and are not easily removed or adjusted. As an example, in the transportation industry, an inspection system may be employed to test and inspect railroad train wheels of a railroad train car. Global railroad standards require train wheels to be inspected after manufacture and during maintenance on a regular basis.

### SUMMARY

In one aspect an inspection system is provided that includes a first inspection unit arranged to couple to a first wheelset of a train during an inspection operation, and a second inspection unit arranged to couple to a second wheelset of the train during the inspection operation, where the first wheelset and the second wheelset are separated along a horizonal axis by an offset distance. The system also includes one or more lifting mechanisms arranged to adjust a vertical position of at least one of the first inspection unit or the second inspection unit along a vertical axis, one or more offset correction mechanisms arranged to adjust a horizonal distance between the first inspection unit and the second inspection unit along the horizonal axis, and one or more controllers communicatively coupled to and arranged to control the first inspection unit, the second inspection unit, the one or more lifting mechanisms and the one or more offset correction mechanisms.

In some aspects, the system can include a transport unit for supporting and moving the system under the train during the inspection operation. In some aspects, the one or more controllers may be arranged to perform operations including receiving, from a computing system communicatively coupled to the one or more controllers, positioning data characterizing a positional movement of the transport unit and controlling the transport unit to position the first inspection unit and the second inspection unit under the train based on the positioning data.

In some aspects, the one or more controllers may be arranged to perform operations including receiving, from the computing system, correction data characterizing a correction for the horizonal distance between the first inspection unit and the second inspection unit, and controlling the one or more offset correction mechanisms, based on the correction data, to adjust the horizonal distance between the first inspection unit and the second inspection unit such that the first inspection unit may be horizontally aligned with the first wheelset and the second inspection unit may be horizontally aligned with the second wheelset.

In some aspects, the system can include a first position sensor communicatively coupled to the one or more controllers and arranged to determine a first offset value characterizing a level of alignment between the first inspection unit and the first wheels, and a second position sensor communicatively coupled to the one or more controllers and arranged to determine a second offset value characterizing a level of alignment between the second inspection unit and the second wheelset. In some aspects, the correction data may be determined based on one or more of the first offset value, the second offset value, and the offset distance.

In some aspects, the first position sensor and the second position sensor can include any of light sensors, camera sensors, or proximity sensors.

In some aspects, the one or more controllers may be arranged to perform operations further including receiving, from the computing system, lifting data characterizing an adjustment for the vertical position of at least one of the first inspection unit or the second inspection unit along the vertical axis based on at least one of the first offset value or the second offset value, and controlling the one or more lifting mechanisms, based on the lifting data, to adjust the vertical position of at least one of the first inspection unit or the second inspection unit such that at least one of the first wheelset or the second wheelset may be lifted along the vertical axis by the one or more lifting mechanisms.

In some aspects, the one or more offset correction mechanisms can include a first offset correction mechanism arranged to adjust a horizonal position of the first inspection unit. In some aspects, the one or more offset correction mechanisms can include a second offset correction mechanism arranged to adjust a horizonal position of the second inspection unit.

In some aspects, the one or more offset correction mechanisms can include a first offset correction mechanism, and the transport unit can include a first portion arranged to support and move the first inspection unit and a second portion arranged to support and move the second inspection unit, where the first portion and the second portion can be coupled to one another by the first offset correction mechanism.

In some aspects, the one or more lifting mechanisms can include a first lifting mechanism arranged to adjust a vertical position of the first inspection unit and the second inspection unit.

In some aspects, the one or more lifting mechanisms can include a first lifting mechanism arranged to adjust a vertical position of the first inspection unit and a second lifting mechanism arranged to adjust a vertical position of the second inspection unit.

In some aspects, the first inspection unit includes one or more first transducers arranged to couple to the first wheelset, the second inspection unit includes one or more second transducers arranged to couple to the second wheelset, and the one or more lifting mechanisms include a first turning device and a second turning device, wherein the first turning device is arranged to contact and lift the first wheelset along the vertical axis. In this case, the one or more controllers may be arranged to perform operations further including controlling the first turning device to rotate the first wheelset, controlling the one or more first transducers to acquire first inspection data of the first wheelset as the first wheelset may be rotated, and transmitting the first inspection data to the computing system to be viewed by an operator.

In some aspects, the second turning device can be arranged to contact and lift the second wheelset along the vertical axis, and the one or more controllers can be arranged to perform operations further including controlling the second turning device to rotate the second wheelset simultaneously to the first wheelset being rotated, controlling the one or more second transducers to acquire second inspection data of the second wheelset as the second wheelset is rotated, and transmitting the second inspection data to the computing system to be viewed by the operator.

In another aspect, another inspection system is provided that includes a transport unit for supporting and moving the inspection system under a train during the inspection operation, and a first inspection unit provided on the transport unit and including a first position sensor arranged to acquire first offset data characterizing a position of the first inspection unit relative to a first wheelset of the train, and one or more first transducers arranged to couple to the first wheelset of the train. The inspection system also includes a second inspection unit provided on the transport unit and including a second position sensor arranged to acquire second offset data characterizing a position of the second inspection unit relative to a second wheelset of the train, and one or more second transducers arranged to couple to the second wheelset of the train, where the first wheelset and the second wheelset are separated along a horizonal axis by an offset distance. The inspection unit also includes one or more lifting mechanisms arranged to adjust a vertical position of at least one of the first inspection unit or the second inspection unit along the vertical axis, one or more offset correction mechanisms arranged to adjust a horizonal distance between the first inspection unit and the second inspection unit along the horizonal axis, and one or more controllers communicatively coupled to and arranged to control the transport unit, the first inspection unit, the second inspection unit, the one or more lifting mechanisms and the one or more offset correction mechanisms.

In some aspects, the inspection system can include a computing system communicatively coupled to the one or more controllers. In some aspects, the computing system may be provided on the inspection system or provided remotely from the inspection system via a wired or wireless connection.

In some aspects, the computing system can include any of a handheld remote controller, a desktop computer, a laptop computer, a smartphone, or a tablet.

In some aspects, the one or more lifting mechanisms can include a first turning device arranged to contact and lift the first wheelset along the vertical axis and rotate the first wheelset during the inspection and a second turning device arranged to contact and lift the second wheelset along the vertical axis and rotate the second wheelset during an inspection. In this case, the one or more controllers may be arranged to perform operations including receiving, from the computing system, positioning data characterizing a positional movement of the transport unit, receiving, from the computing system, correction data characterizing a correction for the horizonal distance between the first inspection unit and the second inspection unit, receiving, from the computing system, lifting data characterizing an adjustment for a vertical position of at least one of the first inspection unit or the second inspection unit along the vertical axis, and controlling one or more of the transport unit, the one or more offset correction mechanisms and the one or more lifting mechanisms to position the inspection system under the train based on one or more of the positioning data, the correction data, or the lifting data.

In some aspects, one or more of the positioning data, the correction data, or the lifting data may be determined based on one or more of the first offset data, the second offset data, or the offset distance.

In some aspects, the one or more controllers may be arranged to perform operations including controlling the one or more offset correction mechanisms to adjust the horizonal distance between the first inspection unit and the second inspection unit such that the first inspection unit may be horizontally aligned with the first wheelset and the second inspection unit may be horizontally aligned with the second wheelset, controlling the one or more lifting mechanisms to adjust the vertical position of at least one of the first inspection unit or the second inspection unit such that at least one of the first wheelset or the second wheelset may be lifted along the vertical axis by the one or more lifting mechanisms, controlling at least one of the first turning device or the second turning device to rotate the first wheelset or the second wheelset, respectively, controlling at least one of the one or more first transducers or the one or more second transducers to acquire inspection data of at least one of the first wheelset or the second wheelset, and transmitting the inspection data to the computing system to be viewed by an operator.

### DESCRIPTION OF DRAWINGS

These and other features will be more readily understood from the following detailed description taken in conjunction with the accompanying drawings, in which:
[0031] FIGS. 1A-1B illustrate an exemplary inspection system, according to some aspects of the present disclosure;
FIGS. 2A-2B are simplified diagram illustrating another non-limiting example of an inspection system, according to some embodiments of the present disclosure;
FIG. 3 is a simplified diagram illustrating another non-limiting example of an inspection system, according to some embodiments of the present disclosure;
FIG. 4 is a simplified diagram illustrating another non-limiting example of an inspection system, according to some embodiments of the present disclosure; and
FIGS. 5A-5B illustrate an axel-side view and a wheel-side view, respectively, of an exemplary train wheelset showing sensor/transducer placement of a plurality of sensors/transducers of the inspection system as described herein.

It is noted that the drawings are not necessarily to scale. The drawings are intended to depict only typical aspects of the subject matter disclosed herein, and therefore should not be considered as limiting the scope of the disclosure. Those skilled in the art will understand that the systems, devices, and methods specifically described herein and illustrated in the accompanying drawings are non-limiting exemplary embodiments and that the scope of the present invention is defined solely by the claims.

### DETAILED DESCRIPTION

Conventionally, in the field of train wheel inspection, non-destructive testing (NDT) inspection systems exist that allow for one inspector/operator to move down the length of a train and inspect a single train wheelset at a time. These existing systems and methods of inspecting wheels of trains, which only inspect one wheelset at a time, can be inefficient and time consuming. By only being configured to inspect one wheelset at a time, and requiring one operator to perform the inspection, these existing systems cannot be tuned to fulfill modern market Critical to Quality characteristics (CTQs). CTQs are constantly evolving as the specific needs, requirements, and expectations of clients and regulators continue to progress. For example, clients are always looking for new systems and methods for performing inspection that focus on optimizing inspection processes while minimizing costs. Accordingly, it would be desirable to provide improved systems and methods for inspecting wheelsets. However, inspectors are required to inspect wheelsets of a wide variety of train models, all of which can have different horizonal separation between adjacent wheelsets (sometimes referred to as a "bogie offset"), which is a design characteristic of trains that varies from model to model. Any offsets/misalignments between the inspection system and the train wheels have a direct negative affect on testing results. Additionally, due in part to the variability of bogie offsets from train to train, there has been no development of a solution that is capable of improving train wheelset inspection systems to significantly reduce inspection time and cost.

The inspection systems and methods described herein provide parallel inspection of multiple wheelsets in parallel, which can be executed by a single operator. In some aspects, the inspection systems and methods described herein includes a plurality of inspection units, each including a position sensors and inspection (NDT) sensors/transducers. Each of the plurality of inspection units can be arranged to couple to a wheelset of a train during an inspection operation, where adjacent wheelsets of the train are separated along a horizonal axis by an offset distance (sometimes referred to as a "bogie offset"), which is a design characteristic of trains that varies from model to model. In some aspects, the inspection systems described herein can be arranged to determine a master wheelset and a slave wheelset and determine a relative position of the slave wheelset to the master wheelset and correct (either manually or automatically) the offset value for either or both wheelsets. The system also includes one or more lifting mechanisms arranged to adjust a vertical position of at least one of the plurality of inspection units along a vertical axis, one or more offset correction mechanisms arranged to adjust a horizonal distance between the plurality of inspection units along the horizonal axis to account for differing bogie offsets. The one or more lifting mechanisms can also include turning devices which can contact and lift the wheelsets and rotate the wheelsets during an inspection. The systems can also include one or more controllers communicatively coupled to and arranged to control the plurality of inspection units, the one or more lifting mechanisms and the one or more offset correction mechanisms.

The inspection systems and methods described herein advantageously provide a plurality of inspection units that can be adjusted relative to one another, via one or more offset correction mechanisms, to modify a horizonal distance between the plurality of inspection units to effectively account for differing bogie offsets for different train systems. By facilitating adjustment of the horizonal distance between the plurality of inspection units the inspection system can be arranged to couple to and inspect two or more wheelsets in parallel, regardless of the bogie offset of the train. Accordingly, the systems methods described herein increase the number of wheelsets that can be inspected for any train in a given shift while maintaining/improving accuracy and reliability for NDT inspection.

Certain exemplary embodiments will now be described to provide an overall understanding of the principles of the structure, function, manufacture, and use of the systems, devices, and methods disclosed herein. One or more examples of these embodiments are illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments substantially have similar features, and thus within a particular embodiment each feature of each like-named component is not necessarily fully elaborated upon.

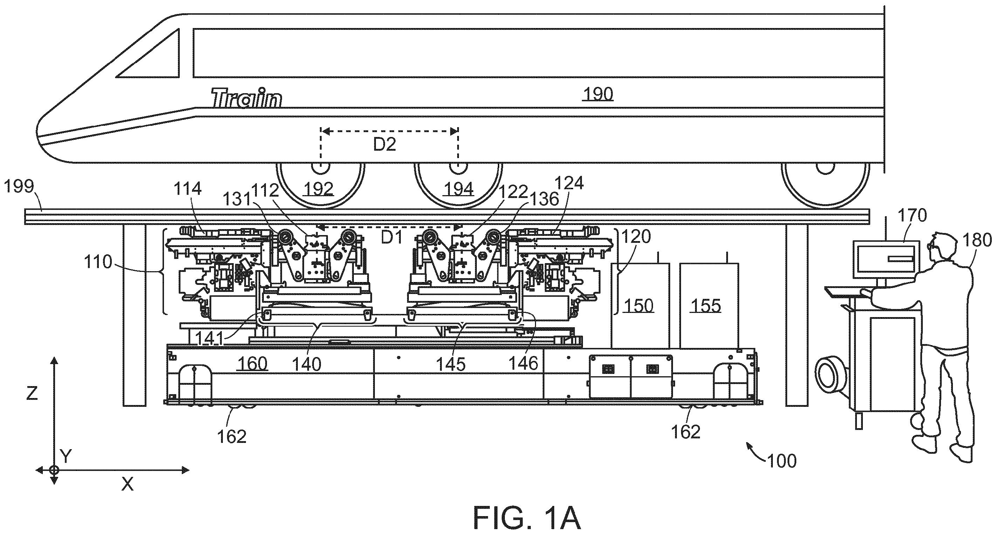

FIGS. 1A-1B illustrate an exemplary inspection system 100, according to some aspects of the present disclosure. The inspection system 100 can be used for inspecting wheelsets of various types of trains by being positioned beneath the train and operated by an operator 180. For example, in reference to FIGS. 1A-1B, the inspection system 100 can be positioned beneath a train 190 and can be designed to inspect wheels (e.g., wheels 192, 194) of the train 190. The inspections system 100 will be described in detail below with references made to FIGS. 1A-1B. In some aspects, the inspection system 100 can include a first inspection unit 110 configured to couple to the first wheelset 192 of the train 190 during an inspection operation, and a second inspection unit 120 configured to couple to the second wheelset 194 of the train 190 during the inspection operation.

The system 100 also includes one or more lifting mechanisms 130, 135, which are arranged to adjust a vertical position of at least one of the first inspection unit 110 or the second inspection unit 120 along a vertical axis Z (e.g., raise and lower), and one or more offset correction mechanisms 140, 145, which are arranged to adjust a horizonal distance D1 between the first inspection unit 110 and the second inspection unit 120 along the horizonal axis X. The inspection system also includes one or more controllers 150, 155 communicatively coupled to and arranged to control the first inspection unit 110, the second inspection unit 120, the one or more lifting mechanisms 130, 135 and the one or more offset correction mechanisms 140, 145.

In some aspects, the inspection system 100 can also include a transport unit 160 for supporting and moving the system 100 under the train 190 during the inspection operation. The transport unit 160 can include wheels 162 (or other means) for driving the inspection system 100. In some aspects, the one or more controllers 150, 155 can be arranged on and configured to control the transport unit 160. For example, during an inspection operation, the train 190 can be driven along an elevated inspection track 199, and then parked for the duration of the inspection. In this case, the transport unit 160 can be arranged to drive inspection system 100 underneath the track 199, sequentially inspecting the wheelsets of the train 190, as discussed in detail below. However, it is also realized that in some cases, it would be possible to maintain the inspection system 100 in a fixed position, and manually move the train 190 along the inspection track 199, sequentially positioning the wheelsets of the train over the inspection system 100 to be inspected.

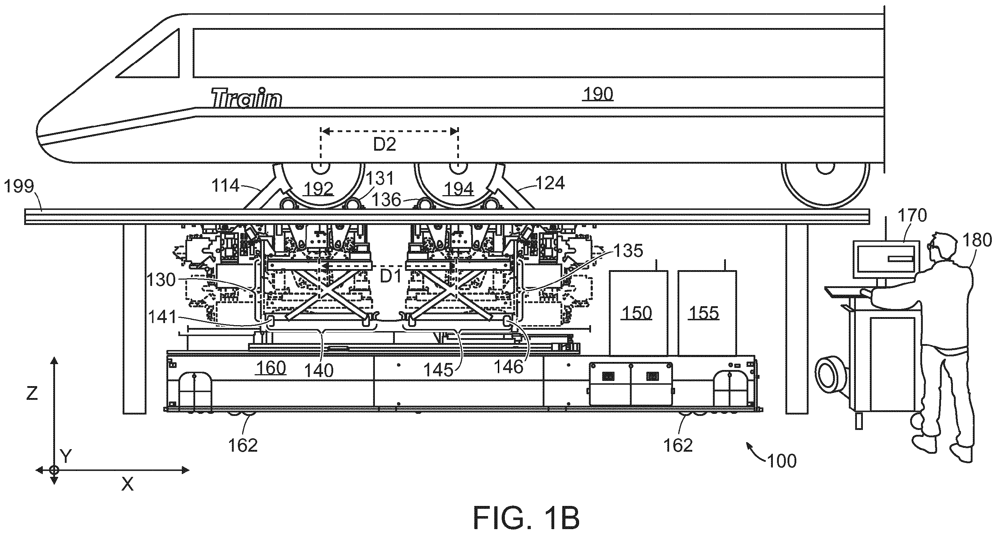

The system 100 can also include a computing system 170 that is communicatively coupled to the one or more controllers 150, 155. In some aspects, the computing system 170 can be provided remotely from the inspection system 100, as shown in FIG. 1, and can be communicatively coupled to the one or more controllers 150, 155 via a wired or wireless connection. Additionally, or alternatively, the computing system 170 can be arranged on the transport unit 160 (e.g., arranged integrally with the one or more controllers 150, 155 or separately). In some aspects, the computing system 170 can be a desktop computer, a laptop computer, a tablet, a smartphone, or any other computing system that can provide commands to the one or more controllers 150, 155 to control the inspection system 100. For example, in some aspects, the computing system 170 can include a handheld remote controller (not shown) with buttons provided thereon that allow for a user (e.g., operator 180) to provide positioning commands by interacting with the buttons of the handheld remote controller. In this case, the commands provided on the handheld remote controller would be transmitted to the one or more controllers 150, 155 to control the inspection system 100. Accordingly, in some aspects, the operator 180 can provide inputs to the computing system 170 which can be received by the one or more controllers 150, 155, to control operations of the inspection system, as discussed below.

In some aspects, each of the one or more offset correction mechanisms 140, 145 and each of the one or more lifting mechanisms 130, 135 can be associated with the first and second inspection units 110, 120, respectively, as shown in FIGS. 1A-1B. For example, prior to an inspection, a first offset correction mechanism 140 and/or a second offset correction mechanism 145 can be arranged to adjust a horizonal position of the first and/or second inspection units 110, 120 relative to one another along the horizonal axis X, such that the inspections units 110, 120 are aligned with the wheelsets 192, 194, which are separated by a bogie offset D2. Similarly, in some aspects, a first lifting mechanism 130 and/or a second lifting mechanism 135 can be arranged to adjust a vertical position of the first and/or second inspection unit 120 along the vertical axis Z to couple the first and/or second inspection units 110, 120 to the wheelsets 192, 194, to perform the inspection, as discussed in greater detail below.

In some aspects, the lifting mechanisms described herein can be, for example, scissor lift type mechanisms that are arranged to raise and lower the first and second inspection units 110, 120 along the vertical axis Z. The lifting mechanisms described herein are not limited to scissor lift type mechanisms and may include other suitable structures such as pneumatic cylinders, linear sliding mechanisms, or structures configured to raise and lower the first and second inspection units 110, 120.

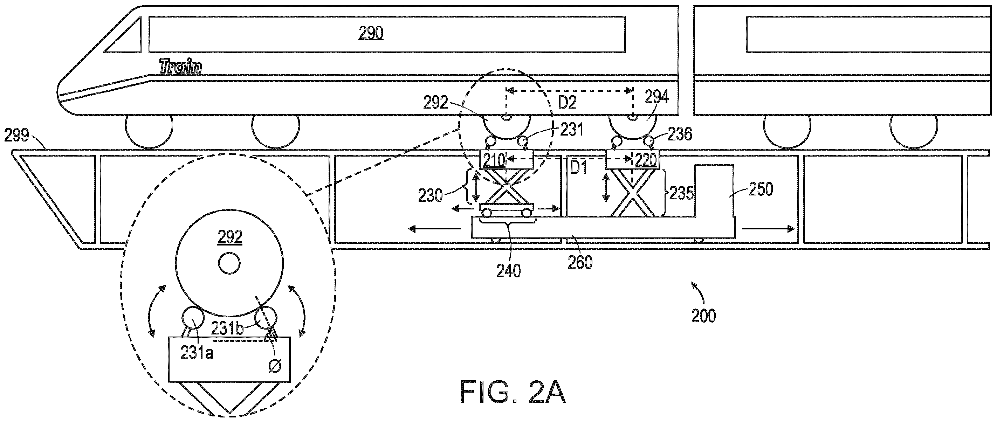

In some aspects, the one or more offset correction mechanisms 140, 145 can be provided on the transport unit 160 and can be arranged to adjust the horizonal distance D1 between the first inspection unit 110 and the second inspection unit 120 along the horizonal axis X, based on the bogie offset D2 of the train 190, to achieve repeatable and reliable inspection results. For example, as shown in FIG. 1A, prior to performing an inspection the one or more controllers 150, 155 can be arranged to control the one or more offset correction mechanisms 140 and/or 145 to adjust the horizonal distance D1 between the first inspection unit 110 and the second inspection unit 120 to account for differences in bogie offsets of different train types being inspected, fixed infrastructure, misalignment in positioning of the inspection system 100, etc. For example, the distance D2 (bogie offset) between adjacent wheels 192 and 194 of the train 190 can vary significantly from train to train, depending on the model of the train. Advantageously, the versatile inspection system 100 can modify the distance D1 between the inspection units 110, 120, to match the bogie offset D2. This allows a single operator 180 to repeatably and reliably perform parallel inspections of the wheelsets 192, 194 of the train using the inspection system 100, regardless of the train type and bogie offset D2, thereby saving significant time and cost. In some aspects, the inspection system 100 can include either one or both offset correction mechanisms 140, 145. Alternatively, in some embodiments, the transport unit 160 can include two portions and the inspection system 100 can include an offset correction system provided between the two portions and arranged to adjust a distance between the two portions. These alternative designs are discussed in greater detail below in reference to FIGS. 2A-5.

The one or more offset correction mechanisms 140, 145 can be arranged to move forward and back (in the +x and -x directions) along the transport unit 160, via driving mechanisms 141, 146, respectively, with their movement controlled by the one or more controllers 150, 155. In some aspects, the driving mechanisms 141, 146 can include, for example, a plurality of wheels, a wheel and track system, a plurality of pressurized air sliders, or any other viable means for precisely adjusting the distance D1 between the first and second inspection units 110, 120. In a case where the transport unit 160 includes two portions and offset correction system is provided between the two portions, the driving mechanisms 141, 146 can be the wheels 162 of the transport system 160, as discussed below.

As sown in FIG. 1A, in some aspects, the first and second inspection units 110, 120 can include first and second position sensors 112, 122 which can be communicatively coupled to the one or more controllers 150, 155. Prior to an inspection operation, when positioning the inspection unit 100, the position sensors 112, 122 can be arranged to sense the wheelsets 192, 194 to determine first and/or second offset values characterizing first and/or second levels of alignment between the inspection units 110, 120 and the wheelsets 192, 194 of the train 190. In some aspects, the first and/or second offset values can include data characterizing a horizontal level of alignment (e.g., in the +x and -x directions) between the inspection units 110, 120 and the wheelsets 192, 194 of the train 190 and/or a vertical level of alignment (e.g., in the +z and -z directions) between the inspection units 110, 120 and the wheelsets 192, 194 of the train 190. In some aspects, the first and second position sensors 112, 122 can be any of light sensors, camera sensors, proximity sensors, or any other sensors that can determine a level of alignment between the inspection units 110, 120 and the wheelsets 192, 194 of the train 190.

The first and second inspection units 110, 120 can also include first and second transducers 114, 124, respectively, which can be coupled to the wheelsets 192, 194 of the train 190 during an inspection operation, as shown in FIG. 1B, and which are arranged to acquire inspection data. In some aspects, the first and second transducers 114, 124 can be individual transducers, phased array transducers, or any other type of ultrasonic transducer that is commonly known in the art. In some aspects, in addition to or alternative to the first and second transducers 114, 124, the system 100 can include other NDT sensors (e.g., eddy current sensors). In some aspects, the inspection system 100 can also include a means for providing a couplant (e.g., water or lubricant) between the first and second transducers 114, 124 and the wheelsets 192, 194 to optimize the acquisition of the inspection data.

The one or more lifting mechanisms 130, 135 can also include first and second sets of turning devices 131, 136, respectively, which are arranged to lift and turn the wheelsets 192, 194 during an inspection operation, while the first and second transducers 114, 124 acquire inspection data. During an inspection operation the one or more controller 150, 155 can control the one or more lifting mechanisms 130, 135 to adjust the vertical position of at least one of the first inspection unit 110 or the second inspection unit 120 such that at least one of the first wheelset 192 or the second wheelset 194 are lifted along the vertical axis by the first and/or second sets of turning devices 131, 136, as shown in FIG. 1B.

A method of inspecting wheelsets 192, 194 of the train 190 using the inspection system 100 is provided below with reference made to FIGS. 1A-1B. As described above, the one or more controllers 150, 155 of the inspection system 100 can be arranged to receive control instructions from the computing system 170. However, it should also be noted, as mentioned above, that while in some aspects the computing system 170 can be provided remotely from the inspection system 100, as shown in FIGS. 1A-1B, the computing system 170 and/or an additional computing system (not shown) can also be arranged integrally with the one or more controllers 150, 155. For example, in a case where the computing system 170 and/or an additional computing system is arranged integrally with the one or more controllers 150, 155, the one or more controllers 150, 155 can include buttons or other interfaces which can be interacted with by the user 180 to control/drive the inspection system 100.

In some aspects, the method can include a step of providing positioning data characterizing a positional movement of the transport unit 160 along the X axis or a Y axis, or any combination thereof, to position the inspection system 100 under the train 190 for inspection. In some aspects, the positioning data can be provided by the operator 180 as an input to the computing system 170 which can be received by the one or more controllers 150, 155, to control movement of the transport unit 160. For example, as described above, in some aspects, the computing system 170 can include a handheld remote controller (not shown) with buttons and/or joysticks or the like provided thereon that allow for a user to provide positioning commands by interacting with the buttons of the handheld remote controller. In this case, the commands provided on the handheld remote controller would be transmitted to the one or more controllers 150, 155 to control movement of the transport unit 160.

In some aspects, the method can include a step of providing correction data characterizing an adjustment of the horizonal distance D1 between the first inspection unit 110 and the second inspection unit 120 by the one or more offset correction mechanisms 140, 145. In some aspects, the correction data can be provided by the operator 180 as an input to the computing system 170 which can be received by the one or more controllers 150, 155, to control movement of the one or more offset correction mechanisms 140, 145. For example, in some cases, the bogie offset D2 of the train 190 may be known by the operator 180. In this case, the correction data can be an adjustment to the distance D1 such that the distance D1 corresponds to the known bogie offset D2. In some aspects, the correction data can be an adjustment which is determined based on information found in a lookup table housing information regarding different bogie offsets for different train models.

In some aspects, the method can include a step of providing lifting data characterizing an adjustment of the vertical position of at least one of the first inspection unit 110 or the second inspection unit 120 along the vertical axis Z by the one or more lifting mechanisms 130, 135. In some aspects, the lifting data can be provided by the operator 180 as an input to the computing system 170 which can be received by the one or more controllers 150, 155, to control movement of the one or more lifting mechanisms 130, 135. For example, as described above, in some aspects, the computing system 170 can include a handheld remote controller (not shown) with buttons and/or joysticks or the like provided thereon that allow for a user to provide positioning commands by interacting with the buttons of the handheld remote controller. In this case, the commands provided on the handheld remote controller would be transmitted to the one or more controllers 150, 155 to control movement of the one or more lifting mechanisms 130, 135. In some aspects, the lifting data can be configured to adjust the vertical position of at least one of the first inspection unit 110 or the second inspection unit 120 such that at least one of the first wheelset 192 or the second wheelset 194 are lifted off of the track 199 along the vertical axis Z by the first and/or second sets of turning devices 131, 136, respectively. Accordingly, in some aspects, the first and second sets of turning devices 131, 136 can be considered parts of the one or more lifting mechanisms 130, 135. In some aspects, the lifting data can also include an angular adjustment of the first and/or second sets of turning devices 131, 136 to allow for the wheelsets 192, 194 to be lifted or lowered by scissor-like angular adjustments of the turning devices 131, 136, as discussed in greater detail below in reference to FIG. 2A. During an inspection operation the one or more controllers 150, 155 to rotate the first and/or second sets of turning devices 131, 136 while acquiring inspection data, as discussed below.

Additionally, or alternatively, in some aspects, the method can include a step of receiving, by one or more controllers 150, 155 and the computing system 170, from the first and/or second position sensors 112, 122, a first offset value and/or a second offset value characterizing a level of alignment between the first inspection unit 110 and the first wheelset 192 and/or a level of alignment between the second inspection unit 120 and the second wheelset 194. In this case, any of the positioning data for the transport unit 160, the correction data for the one or more offset correction mechanisms 140, 145 and/or the lifting data for the one or more lifting mechanisms 130, 135 can be determined based on the first offset value, the second offset value, and/or the offset distance D2.

In some aspects, once the operator 180 has properly positioned the inspection system 100 under the train 190, adjusted the distance D1 to account for the bogie offset D2 of the train, and lifted the first and second wheelsets 192, 194 off of the track 199, the method can include a step of coupling, either manually or automatically, the transducers 114, 124 to the wheelsets 192, 194 of the train 190, as shown in FIG. 1B. Once the transducers 114, 124 are coupled to the wheelsets 192, 194, the inspection system 100 can initiate the flow of a couplant (e.g., water or lubricant), as described above, and begin rotating the wheelsets 192, 194 while acquiring inspection data in parallel and providing the inspection data to the operator 180. In some aspects, the inspection data can be provided to a user interface display of the computing system 170 to be viewed and interacted with by the operator 180 using an inspection software.

During the parallel inspection operation described herein, the sensor measurements from a master wheelset (e.g., wheelset 192) can be projected to a slave wheelset (e.g., wheelset 194) and results of the inspection can be displayed to a user interface communicatively coupled to the computing system 170 for the operator 180 to analyze. Using the information provided to the user interface, the operator 180 can make decisions regarding the parallel inspection and generate and release inspection reports. The operator 180 can also interact with the user interface to go to specific determined defects within the wheelsets for closer analysis. The systems and methods described herein also ensure that all wheels have been evaluated and reported during an inspection operation. In some aspects, the inspection systems described herein can also be arranged to inspect one wheelset at a time, as required for specific train positions and train types.

Exemplary technical effects of the methods, systems, and devices described herein include advantageously provide higher productivity of wheelset inspection by doubling the number of wheelsets which can be inspected at one time by a single operator.

FIGS. 2A-2B are simplified diagrams illustrating another non-limiting example of an inspection system 200 according to some embodiments of the present disclosure. In some aspects, the inspection system 200 can include components like the inspection system 100 of FIGS. 1A-1B, accordingly, like components will not be described. For example, the inspection system 200 can include first and second inspection units 210, 220, position sensors (not shown), transducers (not shown), first and second lifting mechanisms 230, 235, first and second sets of turning devices 231, 236, a transport unit 260, one or more controllers 250, and a computing system (not shown). As shown in FIGS. 2A-2B, the inspection system 200 can only include a single offset correction mechanism 240, which can be arranged to move the first inspection unit 210 relative to the second inspection unit 220, via driving mechanisms 241, as shown. However, it is also realized that the single offset correction mechanism 240 could be arranged to move the second inspection unit 220.

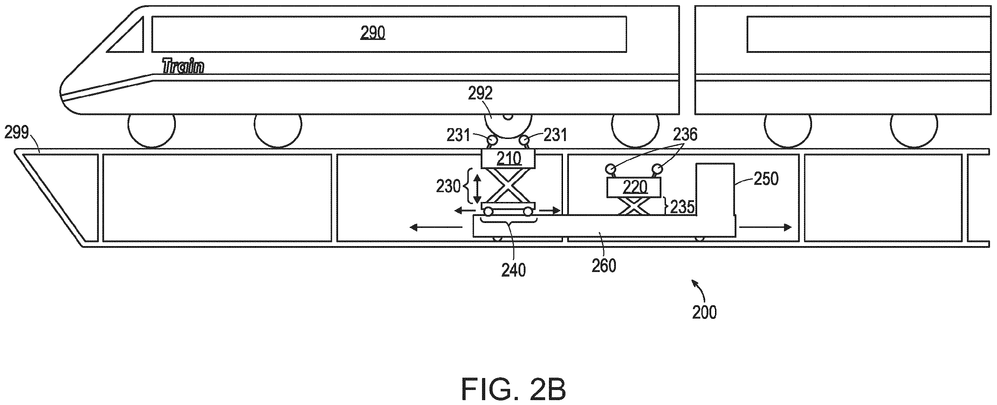

The inspection system 200 is also designed for inspecting two wheelsets 292, 294 of a train 290 in parallel according to the systems and methods described herein. However, as shown in FIG. 2B, it is also realized that the system 200 could be used to inspect a single wheelset at a time. The method of inspection of the wheelsets 292, 294 of a train 290 using the inspection system 200 is similar to the method described above in reference to FIGS. 1A-1B. As shown in FIG. 2A, the two wheelsets can be lifted off of a track 299 by the first and second sets of turning devices 231, 236 of the first and second lifting mechanisms 230, 235. As shown in FIG. 2A, in some aspects, the lifting data that is provided by the computing system to the one or more controllers 250, as described above, can also include an angular adjustment of the first and/or second sets of turning devices 231, 236 to allow for the wheelsets 292, 294 to be lifted or lowered by scissor-like angular adjustments of the turning devices 231, 236. For example, as shown in the zoomed portion of FIG. 2A, the first set of turning devices 231a, 231b can be configured to angularly rotate to change an angle Ø of each of the turning devices 231a, 231b relative to the inspection unit 210. In this case, increasing or decreasing the angle Ø of each of the turning devices 231a, 231b can change a point on the wheelset 292 at which the turning devices 231a, 231b contact, thereby raising or lowering the wheelset 292.

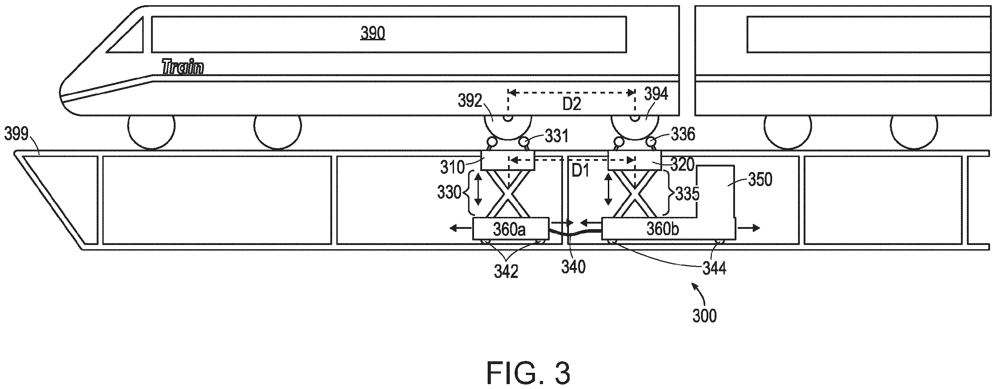

FIG. 3 is a simplified diagram illustrating another non-limiting example of an inspection system 300 according to some embodiments of the present disclosure. In some aspects, the inspection system 300 can include components similar to the inspection system 100 of FIGS. 1A-1B, accordingly, like components will not be described. For example, the inspection system 300 can include first and second inspection units 310, 320, position sensors (not shown), transducers (not shown), first and second lifting mechanisms 330, 335, first and second sets of turning devices 331, 336, one or more controllers 350, and a computing system (not shown). As shown in FIG. 3, the inspection system 300 can also include a transport unit that is split into a first portion 360a and a second portion 360b. In some aspects, the first portion 360a can be configured for supporting and moving the first inspection unit 310 and first lifting mechanism 330 under the train 390 during the inspection operation. Similarly in some aspects, the second portion 360b can be configured for supporting and moving the second inspection unit 320 and second lifting mechanism 335 under the train 390. In some aspects, the one or more controllers 350 and/or the computing system can be provided on either or both of the first portion 360a or the second portion 360b. In this case, the inspection system 300 can include an offset correction mechanism in the form of a tether 340 connecting the first portion 360a and the second portion 360b and wheels 342, 344 for driving the first portion 360a and the second portion 360b to adjust a horizonal distance D1 between the first inspection unit 310 and the second inspection unit 320, similarly to as described above.

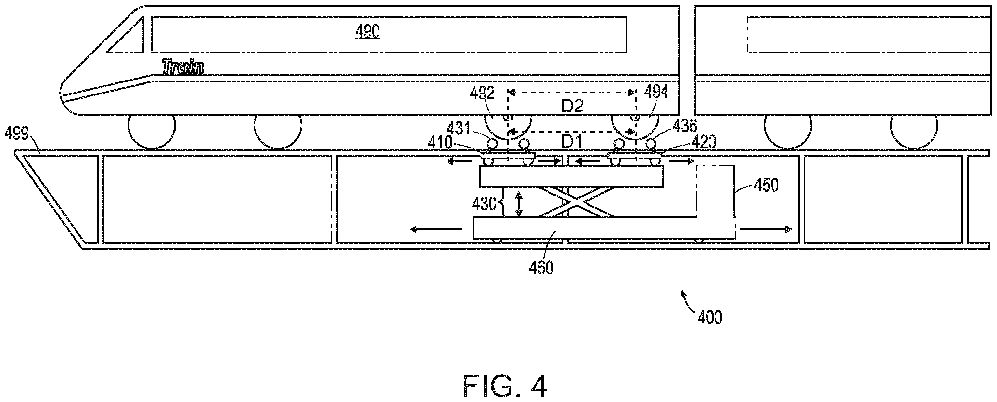

FIG. 4 is a simplified diagram illustrating another non-limiting example of an inspection system 400 according to some embodiments of the present disclosure. In some aspects, the inspection system 400 can include components similar to the inspection system 100 of FIGS. 1A-1B, accordingly, like components will not be described. For example, the inspection system 400 can include first and second inspection units 410, 420, position sensors (not shown), transducers (not shown), first and second sets of turning devices 431, 436, one or more controllers 450, a transport unit 460, and a computing system (not shown). As shown in FIG. 4, the inspection system 400 can only include a singular lifting mechanism 430 that is arranged to adjust a vertical position of both the first and second inspection units 410/420 in tandem.

In this case, the lifting data provided by the operator, as described above, can include data characterizing an adjustment of the vertical position of at least one of the first inspection unit 410 and the second inspection unit 420 along the vertical axis such that first wheelset 492 and the second wheelset 494 are lifted off of the track 499 along the vertical axis by the first and second sets of turning devices 431, 436, respectively.

In some aspects, the first and second sets of turning devices 431, 436 can be considered subcomponents of the lifting mechanism 430 and the operator can also provide additional lifting data characterizing an angular adjustment of the first and/or second sets of turning devices 431, 436, similarly to as described above. For example, once the operator has lifted both the first and second inspection units 410, 420 a predetermined amount, or until at least one of the first or second sets of turning devices 431, 436 contacts one of the wheelsets 492, 494, the operator can provide additional lifting data characterizing change an angle (e.g., angle Ø of FIG. 2A) of each of the sets of turning devices 431, 436 relative to the inspection units 410, 420 to change a point on the wheelsets 492, 494 at which the sets of turning devices 431, 436 contact, thereby raising or lowering the wheelsets 492, 494.

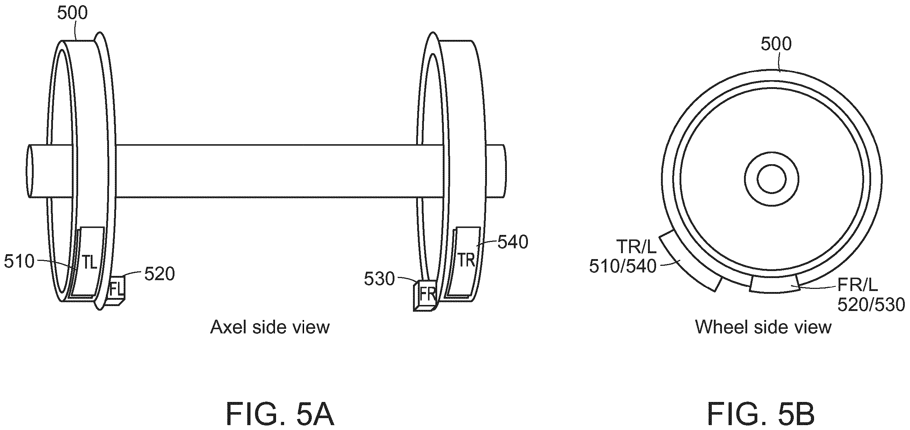

FIGS. 5A-5B illustrate an axel-side view and a wheel-side view, respectively, of an exemplary train wheelset 500 showing sensor placement of a plurality of sensors of the inspection system as described herein. As shown in FIGS. 5A-5B, in some aspects, the inspection systems described herein can include a plurality of sensors/transducers 510, 520, 530, 540, which can be similar to the transducers 114, 124 of inspection system 100). In some aspects, the plurality of sensors/transducers 510, 520, 530, 540 can include ultrasound sensors, eddy current sensors or the like. In a case where the plurality of sensors/transducers 510, 520, 530, 540 include ultrasound sensors, the ultrasound sensors can be individual transducers, phased array transducers, or any other type of ultrasonic transducer that is commonly known in the art. In some aspects, the sensor sets do not change. For example, as shown in FIGS. 5A-5B, each inspection unit (e.g., the first and second inspection units 110, 120 of FIGS. 1A-1B) can include one or more sensor sets. For example, sensors 510 and 540 can be a set and sensors 520 and 530 can be a set. In this case, the sensors 510 and 540 would be a "Tread Right/Left Wheel" (TR/TL) set and the sensors 520 and 530 would be a "Face Right/Left Wheel" (FR/FL) set. In some aspects, either or both of the sensor sets can be arranged to inspect the wheelset 500. In some aspects, the sensor set 510, 540, including TR and TL, can be physically the same and moved from one wheelset to the other for sequential inspection or can be physically separated. The same can be true for the sensor set 520, 530, including FR and FL.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Although at least one exemplary embodiment is described as using a plurality of units to perform the exemplary process, it is understood that the exemplary processes may also be performed by one or plurality of modules. Additionally, it is understood that the term controller/control unit may refer to a hardware device that includes a memory and a processor. The memory may be configured to store the modules, and the processor may be specifically configured to execute said modules to perform one or more processes which are described further below.

The use of the terms "first", "second", "third" and so on, herein, are provided to identify various structures, dimensions or operations, without describing any order, and the structures, dimensions or operations may be executed in a different order from the stated order unless a specific order is definitely specified in the context.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Furthermore, control logic of the present disclosure may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

One or more aspects or features of the subject matter described herein may be realized in digital electronic circuitry, integrated circuitry, specially designed application specific integrated circuits (ASICs), field programmable gate arrays (FPGAs) computer hardware, firmware, software, and/or combinations thereof. These various aspects or features may include embodiment in one or more computer programs that are executable and/or interpretable on a programmable system including at least one programmable processor, which may be special or general purpose, coupled to receive data and instructions from, and to transmit data and instructions to, a storage system, at least one input device, and at least one output device. The programmable system or computing system may include clients and servers. A client and server are substantially remote from each other and typically interact through a communication network. The relationship of client and server arises by virtue of computer programs running on the respective computers and having a client-server relationship to each other.

These computer programs, which may also be referred to as programs, software, software applications, applications, components, or code, include machine instructions for a programmable processor, and may be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium may store such machine instructions non-transitorily, such as for example as would a non-transient solid-state memory or a magnetic hard drive or any equivalent storage medium. The machine-readable medium may alternatively or additionally store such machine instructions in a transient manner, such as for example as would a processor cache or other random-access memory associated with one or more physical processor cores.

To provide for interaction with a user, one or more aspects or features of the subject matter described herein may be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices may be used to provide for interaction with a user as well. For example, feedback provided to the user may be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive trackpads, voice recognition hardware and software, optical scanners, optical pointers, digital image capture devices and associated interpretation software, and the like.

In the descriptions above and in the claims, phrases such as "at least one of' or "one or more of' may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the claims is intended to mean, "based at least in part on," such that an unrecited feature or element is also permissible.

The subject matter described herein may be embodied in systems, apparatus, methods, and/or articles depending on the desired configuration. The embodiments set forth in the foregoing description, including the best mode, do not represent all embodiments consistent with the subject matter described herein. Instead, they are merely some examples consistent with aspects related to the described subject matter. Although a few variations have been described in detail above, other modifications or additions are possible. In particular, further features and/or variations may be provided in addition to those set forth herein. For example, the embodiments described above may be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other embodiments may be within the scope of the following claims.

## Claims

1. A system comprising:
a first inspection unit configured to couple to a first wheelset of a train during an inspection operation;
a second inspection unit configured to couple to a second wheelset of the train during the inspection operation, wherein the first wheelset and the second wheelset are separated along a horizonal axis by an offset distance;
one or more lifting mechanisms configured to adjust a vertical position of at least one of the first inspection unit or the second inspection unit along a vertical axis;
one or more offset correction mechanisms configured to adjust a horizonal distance between the first inspection unit and the second inspection unit along the horizonal axis; and
one or more controllers communicatively coupled to and configured to control the first inspection unit, the second inspection unit, the one or more lifting mechanisms and the one or more offset correction mechanisms.

2. The system of claim 1, further comprising a transport unit for supporting and moving the system under the train during the inspection operation.

3. The system of claim 2, wherein the one or more controllers are configured to perform operations comprising:
receiving, from a computing system communicatively coupled to the one or more controllers, positioning data characterizing a positional movement of the transport unit; and
controlling the transport unit to position the first inspection unit and the second inspection unit under the train based on the positioning data.

4. The system of claim 3, wherein the one or more controllers are configured to perform operations comprising:
receiving, from the computing system, correction data characterizing a correction for the horizonal distance between the first inspection unit and the second inspection unit; and
controlling the one or more offset correction mechanisms, based on the correction data, to adjust the horizonal distance between the first inspection unit and the second inspection unit such that the first inspection unit is horizontally aligned with the first wheelset and the second inspection unit is horizontally aligned with the second wheelset.

5. The system of claim 4, further comprising:
a first position sensor communicatively coupled to the one or more controllers and configured to determine a first offset value characterizing a level of alignment between the first inspection unit and the first wheelset; and
a second position sensor communicatively coupled to the one or more controllers and configured to determine a second offset value characterizing a level of alignment between the second inspection unit and the second wheelset,
wherein the correction data is determined based on one or more of the first offset value, the second offset value, and the offset distance.

6. The system of claim 5, wherein the first position sensor and the second position sensor comprise any of light sensors, camera sensors, or proximity sensors.

7. The system of claim 3, wherein the one or more controllers are configured to perform operations further comprising:
receiving, from the computing system, lifting data characterizing an adjustment of the vertical position of at least one of the first inspection unit or the second inspection unit along the vertical axis based on at least one of the first offset value or the second offset value; and
controlling the one or more lifting mechanisms, based on the lifting data, to adjust the vertical position of at least one of the first inspection unit or the second inspection unit such that at least one of the first wheelset or the second wheelset are lifted along the vertical axis by the one or more lifting mechanisms.

8. The system of claim 4, wherein the one or more offset correction mechanisms comprise:
a first offset correction mechanism configured to adjust a horizonal position of the first inspection unit.

9. The system of claim 8, wherein the one or more offset correction mechanisms comprise:
a second offset correction mechanism configured to adjust a horizonal position of the second inspection unit.

10. The system of claim 5, wherein the one or more offset correction mechanisms comprise a first offset correction mechanism and the transport unit comprises:
a first portion configured to support and move the first inspection unit; and
a second portion configured to support and move the second inspection unit, wherein the first portion and the second portion are coupled to one another by the first offset correction mechanism.

11. The system of claim 7, wherein the one or more lifting mechanisms comprise:
a first lifting mechanism configured to adjust a vertical position of the first inspection unit and the second inspection unit.

12. The system of claim 7, wherein the one or more lifting mechanisms comprise:
a first lifting mechanism configured to adjust a vertical position of the first inspection unit; and
a second lifting mechanism configured to adjust a vertical position of the second inspection unit.

13. The system of claim 7, wherein the first inspection unit comprises one or more first transducers configured to couple to the first wheelset, the second inspection unit comprises one or more second transducers configured to couple to the second wheelset, and the one or more lifting mechanisms comprise a first turning device and a second turning device, wherein the first turning device is configured to contact and lift the first wheelset along the vertical axis, and wherein the one or more controllers are configured to perform operations further comprising:
controlling the first turning device to rotate the first wheelset;
controlling the one or more first transducers to acquire first inspection data of the first wheelset as the first wheelset is rotated; and
transmitting the first inspection data to the computing system to be viewed by an operator.

14. The system of claim 13, wherein the second turning device is configured to contact and lift the second wheelset along the vertical axis, and wherein the one or more controllers are configured to perform operations further comprising:
controlling the second turning device to rotate the second wheelset simultaneously to the first wheelset being rotated;
controlling the one or more second transducers to acquire second inspection data of the second wheelset as the second wheelset is rotated; and
transmitting the second inspection data to the computing system to be viewed by the operator.

15. An inspection system comprising:
a transport unit for supporting and moving the inspection system under a train during the inspection operation;
a first inspection unit provided on the transport unit and comprising
a first position sensor configured to acquire first offset data characterizing a position of the first inspection unit relative to a first wheelset of the train, and
one or more first transducers configured to couple to the first wheelset of the train;
a second inspection unit provided on the transport unit and comprising
a second position sensor configured to acquire second offset data characterizing a position of the second inspection unit relative to a second wheelset of the train, and
one or more second transducers configured to couple to the second wheelset of the train, wherein the first wheelset and the second wheelset are separated along a horizonal axis by an offset distance;
one or more lifting mechanisms configured to adjust a vertical position of at least one of the first inspection unit or the second inspection unit along a vertical axis;
one or more offset correction mechanisms configured to adjust a horizonal distance between the first inspection unit and the second inspection unit along the horizonal axis; and
one or more controllers communicatively coupled to and configured to control the transport unit, the first inspection unit, the second inspection unit, the one or more lifting mechanisms and the one or more offset correction mechanisms.

16. The inspection system of claim 15, further comprising a computing system communicatively coupled to the one or more controllers, wherein the computing system is provided on the inspection system or provided remotely from the inspection system via a wired or wireless connection.

17. The inspection system of claim 16, wherein the computing system comprises any of a handheld remote controller, desktop computer, a laptop computer, a smartphone, or a tablet.

18. The inspection system of claim 16, wherein the one or more lifting mechanisms comprise a first turning device configured to contact and lift the first wheelset along the vertical axis and rotate the first wheelset during the inspection and a second turning device configured to contact and lift the second wheelset along the vertical axis and rotate the second wheelset during an inspection, wherein the one or more controllers are configured to perform operations comprising:
receiving, from the computing system, positioning data characterizing a positional movement of the transport unit;
receiving, from the computing system, correction data characterizing a correction for the horizonal distance between the first inspection unit and the second inspection unit;
receiving, from the computing system, lifting data characterizing an adjustment for a vertical position of at least one of the first inspection unit or the second inspection unit along the vertical axis; and
controlling one or more of the transport unit, the one or more offset correction mechanisms and the one or more lifting mechanisms to position the inspection system under the train based on one or more of the positioning data, the correction data, or the lifting data.

19. The inspection system of claim 18, wherein one or more of the positioning data, the correction data, or the lifting data is determined based on one or more of the first offset data, the second offset data, or the offset distance.

20. The inspection system of claim 18, wherein the one or more controllers are configured to perform operations comprising:
controlling the one or more offset correction mechanisms to adjust the horizonal distance between the first inspection unit and the second inspection unit such that the first inspection unit is horizontally aligned with the first wheelset and the second inspection unit is horizontally aligned with the second wheelset;
controlling the one or more lifting mechanisms to adjust the vertical position of at least one of the first inspection unit or the second inspection unit such that at least one of the first wheelset or the second wheelset are lifted along the vertical axis by the one or more lifting mechanisms;
controlling at least one of the first turning device or the second turning device to rotate the first wheelset or the second wheelset, respectively;
controlling at least one of the one or more first transducers or the one or more second transducers to acquire inspection data of at least one of the first wheelset or the second wheelset; and
transmitting the inspection data to the computing system to be viewed by an operator.
